# FASCICULE DE BREVET EUROPEEN

(11) **EP 3 254 848 B1**
(45) Date de publication et mention de la délivrance du brevet: **06.11.2019**
(21) Numéro de dépôt: 17173303.3
(22) Date de dépôt: 29.05.2017
(51) Int. Cl.: E04F 15/18, E04F 15/10

(54) **REVETEMENT DE SOL COMPRENANT UN DECOR IMPRIME PAR JET D'ENCRE**
BODENBELAG, DER EIN MIT TINTENSTRAHLVERFAHREN AUFGEDRUCKTES DEKOR UMFASST
FLOOR COVERING COMPRISING AN INKJET PRINTED DECORATION

(30) Priorité: 06.06.2016 FR 1655117
(43) Date de publication de la demande: 13.12.2017
(73) Titulaire: GERFLOR, 69100 Villeurbanne (FR)
(72) Inventeur: FERLAY, Charles, 69770 MONTROTTIER (FR); CHARLES, Gwenaëlle, 69170 TARARE (FR)
(74) Mandataire: Cabinet Laurent & Charras

(56) Documents cités:
- WO-A1-2012/034548
- DE-A1-102007 013 132
- FR-A1- 2 562 471

## Description

### DOMAINE TECHNIQUE

La présente invention concerne le secteur technique des revêtements de sols et murs à l'aide de matériaux en polychlorure de vinyle ou similaires et, plus particulièrement, à un revêtement de sol comprenant un décor imprimé par jet d'encre et son procédé de fabrication.

### ART ANTERIEUR

Dans le domaine des revêtements de sol, il est bien connu des dalles ou lames composites à base d'au moins une couche de matière plastique, par exemple du polychlorure de vinyle (PVC). De tels revêtements de sol comprennent habituellement en surface au moins une couche d'usure transparente en matière plastique essentiellement à base de PVC, sous laquelle ou lesquelles est disposée au moins une couche dite de décor en matière plastique, éventuellement moussée, sur laquelle est imprimé un motif ou un décor par héliogravure, avec une couche dite de support consistant généralement dans une nappe non tissée, de fibres de verre par exemple, noyée dans une matière plastique telle que du PVC. Accessoirement, le revêtement de sol peut comporter sous la couche de support une sous-couche résiliente constituée, par exemple, de mousse.

Les motifs ou décors sont ainsi imprimés par un procédé d'héliogravure sur une couche de décor. L'héliogravure est un procédé d'impression en creux par lequel l'encre est transférée directement depuis le cylindre métallique gravé vers la couche de décor, particulièrement adapté aux très longs tirages des revêtements de sol. Toutefois, pour réaliser des motifs et des décors, il est souvent nécessaire d'utiliser plusieurs cylindres métalliques gravés qui, lorsqu'ils ne sont pas utilisés, doivent être stockés grevant ainsi les coûts de fabrication. Or, ces cylindres métalliques sont particulièrement encombrants. Par ailleurs, il convient de graver de nouveaux cylindres métalliques pour chaque nouveau motif ou décor de sorte que, la fabrication de nouveaux cylindres métalliques étant onéreuse et souvent longue, le coût de fabrication des revêtements de sol est grevé.

Afin de remédier à ces inconvénients, une solution bien connue consiste à utiliser des procédés d'impression par jet d'encre qui présentent l'avantage de permettre un changement de motif ou de décor rapide et peu onéreux. Ces procédés utilisent notamment des encres solvant qui bien que présentant une bonne compatibilité chimique avec la couche d'usure, entrainent de fortes émissions de composés organiques volatiles (COV), toxiques et néfastes pour l'environnement.

D'autres techniques, notamment utilisées dans les sols stratifiés, emploient des encres photoréticulables protégés par une couche de résine polyester. Cependant, cette couche de résine polyester est rigide après séchage donc incompatible avec les sols souples.

Une autre solution d'impression à jet d'encre consiste en l'utilisation d'encres sans solvant, en base aqueuse, n'émettant pas de composés organiques volatile ; toutefois, ces encres sans solvant présentent l'inconvénient de ne pas être chimiquement compatibles avec la couche support et la couche d'usure de sorte qu'une délamination des couches support et d'usure apparaît rapidement.

D'autres solutions pour imprimer des revêtements de sols avec un décor sont connues par exemple à partir de US6818282B2, WO2012/034548 A1, FR2562471 A1 ou DE 10 2007 013132 A1.

Une solution utilisant une encre photoréticulable sans solvant a été exposée dans la demande EP 2875949 du demandeur. A cet effet, le procédé proposé dans ladite demande est remarquable en ce que l'encre pigmentaire utilisée est une encre liquide sans solvant déposée sur la couche d'usure ou sur la couche support et recouverte d' une couche de liaison, ladite couche de liaison étant chimiquement compatible avec l'encre à l'état solide formant la couche d'impression décor et avec la couche support ou la couche d'usure. L' encre pigmentaire liquide sans solvant consiste par exemple dans une encre comprenant des uréthane-acrylates et/ou des ester-acrylates. D'autre part, la couche de liaison est par exemple réalisée dans un matériau comprenant une émulsion d'acrylique et d'uréthane et/ou un copolymère acrylique. Cependant, ce procédé est complexe dans la mesure où il impose l'utilisation d'une couche de liaison comme primaire d'accrochage, allongeant ainsi les procédés de fabrication et augmentant leurs coûts.

### EXPOSE DE L'INVENTION

L'un des buts de l'invention est donc de remédier à ces inconvénients en proposant un revêtement de sol, et son procédé de fabrication, de conception simple et peu onéreuse, comportant une couche d'impression obtenue par un procédé d'impression à jet d'encre, pouvant être compatible avec des encres n'émettant pas de composés organiques volatiles (COV) et pouvant être souple, notamment pour être présenté en rouleau.

L'invention peut également être appliquée à la réalisation de revêtement de mur.

Un autre avantage de l'invention est de proposer un revêtement de sol ayant de bonnes propriétés de délamination.

A cet effet et conformément à l'invention, il est proposé un revêtement de sol comprenant une structure multicouche comprenant au moins successivement une couche d'usure, une couche de décor et une sous-couche, la couche de décor se présentant sous la forme d'une feuille de textile non-tissé imprégnée d'un liant et dont l'une des faces comprend un décor imprimé à l'encre.

Le revêtement de sol ainsi obtenu présente une qualité de décor comparable aux techniques classiques utilisant l'héliogravure, tout en permettant d'imprimer la couche décor par un procédé d'impression par jet d'encre, également appelé procédé d'impression numérique. La combinaison d'un liant et d'une feuille de textile non-tissé forme un support d'impression particulièrement compatible avec les techniques d'impression par jet d'encre. La feuille de textile non-tissé comprend en effet des fibres liées entre elles par le liant. L'encre projetée pénètre dans la feuille de textile non-tissé sans toutefois s'étaler grâce au faible volume déposé par cette technique. Dans cette configuration, le liant permet de rendre compatible la liaison entre la feuille de textile non-tissé et l'encre imprimé avec la couche d'usure et/ou le cas échéant la sous-couche. Cette compatibilité est assurée quel que soit le type d'encre utilisé, notamment avec des encres base aqueuse.

De préférence, la feuille de textile non-tissé est réalisée à partir d'un mélange comprenant le liant et des fibres de textile.

Selon une forme de réalisation particulière, le mélange de fibres et de liant est ensuite conformé en feuille et séché, par toute technique appropriée.

Avantageusement, la feuille de textile non-tissé est réalisée à partir du liant et de fibres naturelles, de fibres synthétiques, ou de fibres minérales synthétiques.

Les feuilles de textile non-tissé sont préférentiellement obtenues par voie papetière. Cette méthode connue utilise un mélange de type latex contenant de l'eau, des tensioactifs et des fibres, le mélange étant étalé sur un convoyeur par soufflage. L'eau de ce mélange est ensuite évacuée pour obtenir une feuille humide. Celle-ci est alors décollée du convoyeur pour être trempée dans un encrier contenant le liant. Le liant imprègne alors la feuille humide. La feuille de textile non-tissé est ensuite obtenue suite à une étape additionnelle de séchage. La feuille de textile non-tissé comprend alors un mélange de fibres maintenues entre elles par le liant.

Les feuilles de textile non-tissé pouvant être utilisées selon la présente invention sont notamment des feuilles de textile non-tissé réalisés à base de fibres naturelles telle que des fibres de cellulose, de coton, de lin, ou encore des fibres synthétiques telles que des fibres de polyester, d'aramide, de Nomex, de polynaphtalate d'éthylène, de polyéthylène téréphtalate ou équivalent, ou encore des fibres minérales synthétiques telles que des fibres de verre ou des fibres de basalte.

Les fibres naturelles sont disponibles à faible coût et permettent d'améliorer la stabilité dimensionnelle, ces fibres étant moins sensibles aux changements de température. Les fibres synthétiques permettent elles d'améliorer la souplesse du revêtement de sol formé en fonction des applications recherchées.

Avantageusement, la feuille de textile non-tissé est réalisée à partir d'un mélange de fibres naturelles et de fibres synthétiques et/ou de fibres minérales synthétiques. L'utilisation d'un tel mélange permet d'augmenter la résistance au pelage du revêtement de sol obtenu selon l'invention, tout en présentant un bon rendu d'impression de la couche de décor. Les fibres minérales permettent à la fois d'améliorer la stabilité dimensionnelle du revêtement de sol formé ainsi que sa résistance au pelage. L'utilisation d'encre à base aqueuse est également possible, le liant de la feuille de textile non-tissé permettant une meilleure accroche avec la couche d'usure et/ou la sous-couche. Le revêtement de sol obtenu peut également être souple pour des applications en rouleau, ou plus rigide pour des applications en dalle, en modifiant par exemple la composition de la sous-couche et/ou de la couche d'usure, et/ou les proportions de fibres et de liant.

Avantageusement, la feuille de textile non-tissé est réalisée à partir d'un mélange comprenant 20 à 80% de fibres naturelles et 80 à 20% de fibres synthétiques. Ces proportions présentent des qualités particulièrement satisfaisantes de résistance au pelage du revêtement de sol. Alternativement, l'utilisation d'au moins 20% de fibres naturelles en combinaison avec au moins 20% de fibres synthétiques permet également d'améliorer la résistance au pelage du revêtement de sol obtenu.

Avantageusement, la feuille de textile non-tissé est réalisée à partir d'un mélange comprenant 20 à 80% de fibres naturelles et 80 à 20% de fibres minérales synthétiques. Alternativement, l'utilisation d'au moins 20% de fibres naturelles en combinaison avec au moins 20% de fibres minérales synthétiques permet également d'améliorer la résistance au pelage du revêtement de sol obtenu ainsi que sa stabilité dimensionnelle.

Les encres pouvant être utilisés avec l'invention peuvent être de différents types, notamment des encres colorant ou des encres pigmentaires. Ces encres peuvent également être photoréticulables, à base aqueuse ou à base solvant.

Avantageusement, la feuille de textile non-tissé comprend 15 à 50% de liant en poids total de la feuille de textile non-tissé. La proportion de liant en poids total de la feuille de textile non-tissé peut être adaptée en fonction du mélange de fibres naturelles et synthétiques et/ou minérales synthétiques utilisé. Cependant, il est généralement préférable d'utiliser une feuille de textile non-tissé comprenant de 20 à 50%, plus préférentiellement de 30 à 50% de liant en poids total de la feuille de textile non-tissé afin d'améliorer la résistance au pelage, et ce pour la plupart des types de fibre et de liant utilisés.

Les liants pouvant être utilisés selon la présente invention sont notamment des liants thermoréticulables tel que des liants à base d'éthylene-acetate de vinyle (EVA). A titre d'exemples, les liants pouvant être utilisés sont également les liants à base styrène acrylique (SA) ou les liants à base acrylique tel que le poly(acétate de vinyle) (PVAC) ou encore le polychlorure de vinyle (PVC) ou encore tout liant thermoplastique équivalent.

Avantageusement, la feuille de textile non-tissé présente un grammage compris entre 20 et 80 g/m², préférentiellement entre 20 et 40 g/m². Il est en effet préférable d'utiliser une feuille de textile non-tissé présentant un grammage assez léger, notamment compris entre 20 et 40 g/m² celui-ci pouvant cependant varier de quelques grammes. Une feuille de textile non-tissé dont le grammage est compris entre 20 et 40 g/m² permet de limiter les risques de délamination du revêtement de sol dû à la feuille de textile non-tissé. Ce faible grammage assure une bonne pénétration de la sous-couche et de la couche d'usure lors du complexage et/ou de l'enduction d'un plastisol sur la feuille de textile non-tissé.

La combinaison d'un grammage compris entre 20 et 40 g/m² et d'une proportion de liant comprise entre 20 et 50% permet de limiter l'apparition de bulles lors de la fabrication du revêtement de sol tout en garantissant une bonne résistance au pelage.

Avantageusement, la feuille de textile non-tissé comprend une face en regard avec la sous-couche laquelle face est liée à une armature de renfort. Cette armature de renfort améliore notamment la stabilité dimensionnelle du revêtement de sol. La combinaison d'un grammage compris entre 20 et 40 g/m² et d'une proportion de liant comprise entre 20 et 50% permet d'autant plus de limiter l'apparition de bulles dû à la présence d'une armature de renfort lors de la fabrication du revêtement de sol tout en garantissant une bonne résistance au pelage.

L'invention concerne également un procédé de fabrication de revêtement de sol comprenant une structure multicouche incluant successivement au moins une couche d'usure, une couche de décor et une sous-couche. Le procédé selon l'invention consiste à imprimer un décor sur l'une des faces d'une feuille de textile non-tissé imprégnée d'un liant, au moyen d'une imprimante à jet d'encre projetant une encre liquide pour former la couche de décor, et à lier ensemble la couche d'usure, la couche de décor et la sous-couche pour former la structure multicouche du revêtement de sol.

De préférence, la feuille de textile non tissé imprégnée d'un liant est réalisée à partir d'un mélange comprenant le liant et des fibres de textile, par exemple conformé en feuille et séché.

Les techniques classiques permettant de lier ensemble la couche d'usure, la couche de décor et la sous-couche peuvent être employées. A titre d'exemples, ces couches peuvent être liées par laminage, collage, collage à chaud, pressage, enduction.

Avantageusement, le procédé selon l'invention comprend au moins une étape consistant à :
- enduire la sous-couche sur une face inférieure de la couche de décor, et / ou
- enduire la couche d'usure sur une face supérieure de la couche de décor.

L'invention concerne également l'utilisation d'un procédé d'impression à jet d'encre pour imprimer un décor sur l'une des faces d'une feuille de textile non-tissé imprégnée d'un liant dans un procédé de fabrication de revêtement de sol comprenant une structure multicouche incluant successivement au moins une couche d'usure, une couche de décor et une sous-couche.

### DESCRIPTION SOMMAIRE DES FIGURES

D'autres avantages et caractéristiques ressortiront mieux de la description qui va suivre de plusieurs variantes d'exécution, données à titre d'exemples non limitatifs, du revêtement de sol et de son procédé de fabrication conformes à l'invention, en référence au dessin annexé sur lequel :

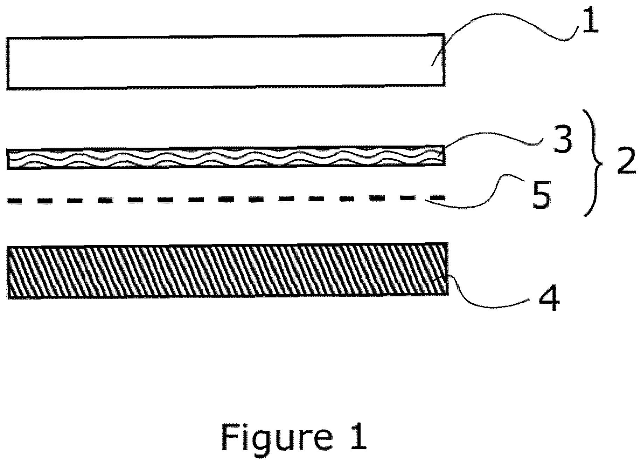

- la figure 1 illustre, de manière schématique et en coupe transversale, une forme de réalisation d'un structure multicouche selon l'invention pour la réalisation d'un revêtement de sol ;

### DESCRIPTION DETAILLEE DE L'INVENTION

L'invention concerne un revêtement de sol comprenant une structure multicouche comprenant une couche de décor (2). Le revêtement de sol selon l'invention est de conception simple et peu onéreuse et comporte une couche d'impression obtenue par un procédé d'impression à jet d'encre. Le revêtement de sol selon l'invention, peut être compatible avec des encres n'émettant pas de composés organiques volatiles (COV), notamment des encres base aqueuse. Le revêtement de sol selon l'invention peut présenter tout type de forme, notamment en panneau ou en dalle ou sous forme souple, notamment pour être présenté en rouleau. Des applications possibles du revêtement de sol selon l'invention peuvent être l'aéronautique ou encore les sols pour bâtiments recevant du public.

En référence à la figure 1, le revêtement de sol selon l'invention comprend une structure multicouche comprenant au moins successivement une couche d'usure (1), une couche de décor (2) et une sous-couche (4). La couche de décor (2) se présente sous la forme d'une feuille de textile non-tissé (3) imprégnée d'un liant et dont l'une des faces comprend un décor imprimé à l'encre. La feuille de textile non-tissé (3) comprend ainsi des fibres liées entre elles par le liant. En pratique, la feuille de textile non-tissé peut être réalisée à partir d'un mélange comprenant le liant et des fibres de textile, lequel mélange est par exemple conformé ensuite en feuille et séché, par toute technique appropriée. D'autres techniques peuvent être utilisées. Le liant peut notamment se présenter sous la forme d'un liquide ou d'une mousse.

L'impression du décor de la feuille de textile non-tissé est réalisée par un procédé d'impression par jet d'encre.

Ainsi, la structure du revêtement de sol selon l'invention reste simple tout en présentant un aspect visuel comparable aux revêtements de sol dont la couche de décor est imprimée par héliogravure.

Bien évidemment des couches supplémentaires peuvent être rajoutées à la structure multicouche sans pour autant modifier l'objet de l'invention. A titre d'exemple, la structure multicouche peut comprendre une couche d'équilibrage liée à la sous-couche et destinée à être en contact avec le sol. Cette couche d'équilibrage peut notamment être en matière plastique, tel que du polychlorure de vinyle, et de préférence d'une épaisseur de 2 mm. Pour satisfaire par exemple au classement U4 P3 de la norme française UPEC, la couche d'équilibrage présente une dureté shore A comprise entre 80 et 95. Cette couche d'équilibrage peut également être en mousse de PVC ou de polyuréthane pour conférer des propriétés d'isolation acoustique et/ou thermique au revêtement de sol ou de mur. Dans le cas où cette couche d'équilibrage est en mousse, sa densité est comprise entre 0,2 et 0,9.

Selon un autre mode de réalisation particulier, la couche d'usure selon l'invention peut comprendre un vernis, positionné sur la face de la couche d'usure destinée à être en contact avec l'utilisateur. Cette couche de protection optionnelle peut permettre d'améliorer les propriétés de résistance à la rayure du produit, ou de résistance aux tâches par exemple. En outre, elle peut également apporter un aspect de surface plus mat au produit, qui peut être recherché dans certains domaines d'application. Elle peut notamment être à base de polyuréthane ou d'acrylique ou de leurs mélanges ; et avantageusement présenter une masse surfacique comprise entre 5 et 50 g/m2.

Un autre avantage de l'invention est de proposer un revêtement de sol ayant de bonnes propriétés de délamination.

Le grammage de la feuille de textile non-tissé est également important, il n'est ainsi pas souhaitable d'utiliser une feuille de textile non-tissé dont le grammage est supérieur à 80g/m² au risque de diminuer la résistance à la délamination.

Avantageusement, le grammage de la feuille de textile non-tissé est compris entre 20 et 80 g/m², préférentiellement entre 20 et 40 g/m² de manière à obtenir un décor imprimé présentant un bon aspect visuel ainsi qu'un revêtement de sol présentant de bonnes valeurs de résistance à la délamination.

De manière avantageuse, les caractéristiques de la couche d'usure et/ou de la sous-couche du revêtement de sol selon l'invention sont les suivantes :
Au niveau de leur composition, elles comprennent classiquement un polymère. Le polymère le plus classiquement utilisé est un polymère à base vinylique tel que le polychlorure de vinyle (PVC), éventuellement en combinaison avec du polyvinylbutyrate (PVB), ou le polyvinyl acétate (PVA). Les polyoléfines peuvent également être utilisées. Le polyuréthane (PU) est également une alternative au PVC, obtenu par réticulation entre l'huile de ricin ou le glycérol et un isocyanate, tel que décrit dans le brevet EP 2 307 609. Une autre alternative concerne l'utilisation de linoleum.

Elles peuvent en outre contenir au moins un additif choisi dans le groupe suivant : plastifiants, charges minérales, stabilisants thermiques ou UV, agents dessicants, lubrifiants, agents de mise en oeuvre (« processing aids »), pigments, ignifugeants.

Les charges minérales peuvent être choisies dans le groupe comprenant le carbonate de calcium, les craies, le kaolin, le sulfate de baryum, le talc, les trihydrates d'aluminium, de la farine de bois ou de liège, ou de la silice.

Les plastifiants peuvent être choisis dans le groupe comprenant les orthophtalates de haut poids moléculaire comme le DIDP (di-iso-décyl phatlate), les téréphtalates, les sébaçates (par exemple le sébaçate de dibutyle ou DBS), les adipates.

De préférence, et pour augmenter les performances mécaniques et la résistance au poinçonnement et au roulage et permettre une meilleure stabilité dimensionnelle du revêtement de sol dans le temps, la feuille de textile non-tissé (3) comprend une face en regard avec la sous-couche (4) laquelle face est liée à une armature de renfort (5) telle qu'une grille ou un voile de verre.

Cette armature de renfort (5) se présente par exemple sous la forme d'une grille ou d'un quadrillage de fils textiles d'épaisseur négligeable, ou bien d'un voile de verre. Les fils textiles de ladite armature de renfort (5) présentent, de préférence, une grille d'une contexture supérieure à 2 x 2 et dont le titre des fils de trame et de chaine est compris entre 34 et 136 tex. L'armature de renfort (5) permet d'augmenter les performances mécaniques et la résistance au poinçonnement et au roulage du revêtement de sol. L'armature de renfort (5) assure une meilleure stabilité dimensionnelle du revêtement dans le temps. Selon une autre technique, l'armature de renfort (5) peut être noyée dans la face supérieure de la sous-couche (4), laquelle sous-couche (4) est ensuite rendue solidaire de la face du textile non-tissé (3) en regard avec la sous-couche (4).

Des tests ont été réalisés par le demandeur, avec douze exemples de structures multicouches différents, à savoir les constructions #1 à #12, dans lesquelles plusieurs types de feuille de textile non-tissé (3) ont été testés, afin de mesurer la valeur de délamination de ladite feuille de textile non-tissé à la sous-couche (3) et/ou la couche d'usure (1).

Chaque construction testée comprend, dans le sens de la couche d'usure (1) vers la sous-couche (4) :
- une couche d'usure (1) transparente réalisée à partir de PVC, d'une épaisseur de 0,65 millimètre environ.
- une couche de décor (2) se présentant sous la forme d'une feuille de textile non-tissé imprégnée d'un liant et dont l'une des faces comprend un décor imprimé à l'encre.
- une sous-couche réalisée à partir de PVC (4) d'une épaisseur de 0,90 millimètre environ.

L'épaisseur totale de chaque construction ainsi obtenue est d'environ 2mm.

Chacune des couches d'usure ou sous-couche peut être réalisée indépendamment par pressage, calandrage ou enduction. Les différentes constructions peuvent être ensuite réalisées en liant les couches d'usure, de décor et sous-couche par complexage. Alternativement, les couches d'usure et/ou sous-couches peuvent être obtenue par enduction sur un support classique puis complexée, et/ou par enduction sur la feuille textile non-tissé.

Chaque couche d'usure ou sous-couche peut éventuellement être grainée.

Les liants testées sont notamment des liants thermoréticulables tel que des liants à base d'éthylene-acetate de vinyle (EVA), des liants à base styrène acrylique (SA) ou les liants à base acrylique (A). D'autres types de liants peuvent être utilisés, notamment des liants à base de poly(acétate de vinyle) (PVAC) ou encore le polychlorure de vinyle (PVC).

Pour chacune des constructions de #1 à #12, le pourcentage de liant est donné en poids total de la feuille de textile non-tissé (3) obtenue.

La constuction #1 comprend une feuille de textile non tissé dont les fibres sont un mélange de 65% de fibres de cellulose et de 35% de fibres polyester et dont la proportion de liant est de 20%, le liant étant un liant EVA. Le grammage de la feuille de textile non tissé ainsi obtenu est de 25,1 g/m².

La constuction #2 comprend une feuille de textile non tissé dont les fibres sont un mélange de 70% de fibres de cellulose et de 30% de fibres de polyester et dont la proportion de liant est de 20%, le liant étant un liant SA. Le grammage de la feuille de textile non tissé ainsi obtenu est de 20,3 g/m².
La constuction #3 comprend une feuille de textile non tissé dont les fibres sont un mélange de 65% de fibres de cellulose et 35% de fibres de polyester et dont la proportion de liant est de 20%, le liant étant un liant SA. Le grammage de la feuille de textile non tissé ainsi obtenu est de 30,2 g/m².

La constuction #4 comprend une feuille de textile non tissé dont les fibres sont un mélange de 80% de fibres de cellulose et 20% de fibres de polyester et dont la proportion de liant est de 35%, le liant étant un liant SA. Le grammage de la feuille de textile non tissé ainsi obtenu est de 25 g/m².

La constuction #5 comprend une feuille de textile non tissé dont les fibres sont un mélange de 55% de fibres de cellulose et de 45% de fibres de polyester et dont la proportion de liant est de 45%, le liant étant un liant SA. Le grammage de la feuille de textile non tissé ainsi obtenu est de 30 g/m².

La constuction #6 comprend une feuille de textile non tissé dont les fibres sont un mélange de 26% de fibres de cellulose et de 74% de fibres de polyester et dont la proportion de liant est de 30%, le liant étant un liant SA. Le grammage de la feuille de textile non tissé ainsi obtenu est de 35 g/m².

La constuction #7 comprend une feuille de textile non tissé dont les fibres sont un mélange de 22% de fibres de cellulose et de 78% de fibres de polyester et dont la proportion de liant est de 25%, le liant étant un liant A. Le grammage de la feuille de textile non tissé ainsi obtenu est de 35 g/m².

La constuction #8 comprend une feuille de textile non tissé dont les fibres sont un mélange de 41% de fibres de cellulose, de 44% de fibres de polyester et de 15% de fibres de verre et dont la proportion de liant est de 25%, le liant étant un liant A. Le grammage de la feuille de textile non tissé ainsi obtenu est de 30 g/m².

La constuction #9 comprend une feuille de textile non tissé dont les fibres sont un mélange de 57% de fibres de cellulose et de 42% de fibres de verre et dont la proportion de liant est de 20%, le liant étant un liant EVA. Le grammage de la feuille de textile non tissé ainsi obtenu est de 30 g/m².

La constuction #10 comprend une feuille de textile non tissé dont les fibres sont un mélange de 70% de fibres de cellulose et de 30% de fibres de polyester et dont la proportion de liant est de 15%, le liant étant un liant PVC. Le grammage de la feuille de textile non tissé ainsi obtenu est de 20,7 g/m².

La constuction #11 comprend une feuille de textile non tissé dont les fibres sont un mélange de 70% de fibres de cellulose et de 30% de fibres de polyester dont la proportion de liant est de 36%, le liant étant un liant PVC. Le grammage de la feuille de textile non tissé ainsi obtenu est de 28,3 g/m².

La constuction #12 comprend une feuille de textile non tissé dont les fibres sont un mélange de 55% de fibres de cellulose et de 45% de fibres de polyester et dont la proportion de liant est de 36%, le liant étant un liant PVC. Le grammage de la feuille de textile non tissé ainsi obtenu est de 26,6 g/m².

Le procédé selon l'invention permettant notamment d'obtenir les constructions #1 à #12 consiste alors à imprimer un décor sur l'une des faces de chaque feuille de textile non-tissé imprégnée d'un liant, au moyen d'une imprimante à jet d'encre projetant une encre liquide pour former la couche de décor, et à lier ensemble, par exemple par pressage à chaud la couche d'usure, la couche de décor et la sous-couche pour former la structure multicouche du revêtement de sol.

Avantageusement et afin d'améliorer la résistance à la délamination entre les différentes couches du revêtement selon l'invention, le revêtement de sol selon l'invention peut comprendre au moins une couche d'usure et/ou une sous-couche obtenue(s) par enduction. Le procédé comprend alors au moins une étape qui consiste à :
- enduire la sous-couche sur une face inférieure de la couche de décor,
   et / ou
- enduire la couche d'usure sur une face supérieure de la couche de décor

L'enduction de la sous-couche et/ou de la couche d'usure est réalisé à partir d'un plastisol, notamment d'un platisol PVC. Avantageusement, la viscosité du plastisol est comprise entre 1000 et 10000 centipoises (à environ 30°C), la viscosité étant mesurée au Brookfield (20 tours/min). Afin d'améliorer la pénétration du plastisol dans la feuille de textile non tissée, la viscosité du plastisol peut être diminuée entre 1000 et 6000 centipoises. Une meilleure pénétration du plastisol permet d'améliorer la résistance à la délamination entre couches du revêtement de sol.

Avantageusement et que ce soit dans un procédé par complexage ou par enduction, une face ou les deux faces de la couche d'usure et/ou de la sous-couche peuvent être grainées afin de présenter un aspect de surface particulier, d'améliorer la glissance, voire d'améliorer la valeur de délamination entre couches du revêtement de sol obtenu.

L'encre utilisée est une encre photoréticulable sans solvant de la gamme VUTEK® superflex ou VUTEK® triangle, imprimé par une imprimante à jet d'encre VUTEK® commercialisée par la société EFi. Les encres ECO UV commercialisées par la société ROLAND et les encres latex base aqueuse des références HP881 et HP891, commercialisées par la société Hewlett Packard ont également été testées avec succès. L'encre étant imprimé directement sur la feuille de textile non tissé, différents types d'encres peuvent être utilisés tout en conservant de bonnes valeurs de délamination, notamment des encres colorant ou des encres pigmentaires. Ces encres peuvent également être indifféremment à base aqueuse ou à base solvant.

Le tableau 1 résume les compositions des feuilles de textile non-tissé des constructions #1 à #12.

**Tableau 1**

| Construction | Proportions de fibres | Proportion de liant % | Nature du liant |
|---|---|---|---|
| #1 | 65% cellulose/ 35% polyester | 20 | EVA |
| #2 | 70% cellulose/ 30% polyester | 20 | SA |
| #3 | 65% cellulose / 35% polyester | 20 | SA |
| #4 | 80% cellulose / 20% polyester | 35 | SA |
| #5 | 55% cellulose / 45% polyester | 45 | SA |
| #6 | 26% cellulose / 74% polyester | 30 | SA |
| #7 | 22% cellulose / 78% polyester | 25 | A |
| #8 | 41% cellulose / 44% polyester /15% verre | 25 | A |
| #9 | 57% cellulose / 42% verre | 20 | EVA |
| #10 | 70% cellulose/ 30% polyester | 15 | PVC |
| #11 | 70% cellulose/ 30% polyester | 36 | PVC |
| #12 | 55% cellulose / 45% polyester | 36 | PVC |

Le tableau 2 présente les résultats de test de délamination effectués sur les constructions #1 à #12, les couches d'usure et sous-couche étant obtenues par calandrage puis complexée à chaud dans une presse pour être liées à chacune des couche de décor.

**Tableau 2**

| | valeur de délamination en N/cm |
|---|---|
| **Construction** | **complexage** |
| **#1** | 0,44 |
| **#2** | 0,36 |
| **#3** | 0,40 |
| **#4** | 0,42 |
| **#5** | 0,53 |
| **#6** | 0,66 |
| **#7** | 0,39 |
| **#8** | 0,78 |
| **#9** | 0,74 |
| **#10** | 0,37 |
| **#11** | 0,76 |
| **#12** | 0,74 |

Le tableau 3 présente les résultats de test de délamination effectués sur les constructions #3, #10 et #12 obtenues par enduction des couches d'usure et sous-couche sur chaque feuille de textile non-tissé. La couche d'usure est également grainée.

**Tableau 3**

| | valeur de délamination en N/cm |
|---|---|
| **Construction** | **enduction suivi d'un grainage** |
| **#3** | 0,67 |
| **#10** | 0,57 |
| **#11** | 0,78 |

La valeur de délamination, également appelée valeur de résistance au pelage, est mesurée selon la norme NF EN ISO 24345 et donnée en N/cm.

Ces différents tests et constructions permettent de démontrer que la résistance à la délamination du revêtement de sol selon l'invention est conforme pour des applications dans le bâtiment. L'aspect du décor obtenu est similaire à celui de décor obtenu par héliogravure tout en simplifiant la structure du revêtement de sol et en présentant une bonne souplesse ainsi qu'une bonne stabilité dimensionnelle et ce quel que soit le type d'encre utilisé.

Le procédé d'obtention par enduction utilisé pour les constructions #3, #10, #11 et consistant à imprimer un décor sur l'une des faces d'une feuille de textile non-tissé imprégnée d'un liant, au moyen d'une imprimante à jet d'encre projetant une encre liquide pour former la couche de décor, puis à :
- enduire la sous-couche sur une face inférieure de la couche de décor,
   et
- enduire la couche d'usure sur une face supérieure de la couche de décor permet d'obtenir des valeurs de délamination plus importantes et permet donc d'obtenir un revêtement pour des applications à fort trafic où le revêtement est particulièrement sollicité.

Les différents pourcentages de liant en poids total de la feuille de textile non-tissé (3) testés montrent de bons résultats lorsque la feuille de textile non-tissé comprend de 15 à 50% de liant en poids total de la feuille de textile non-tissé (3). Avantageusement et dans le but d'améliorer la résistance à la délamination, la feuille de textile non-tissé comprend de 25 à 50% de liant en poids total de la feuille de textile non-tissé, plus préférentiellement de 30 à 50% de liant en poids total de la feuille de textile non-tissé.

Les constructions #3, #6, #8, #9, #11, #12 sont préférées dans la mesure où elles permettent d'obtenir une résistance au pelage supérieure à 0,60 N/cm tout en permettant un bon compromis en terme de stabilité dimensionnelle, de limitation d'apparition de bulles et de facilité de réalisation.

Les constructions #8, #9, #11, #12 sont particulièrement préférées car elles permettent d'obtenir une résistance au pelage supérieure à 0,70 N/cm, leur permettant une utilisation dans des applications à très fort trafic.

Enfin, il est bien évident que les exemples que l'on vient de donner ne sont que des illustrations particulières en aucun cas limitatives quant aux domaines d'application de l'invention.

## Revendications

1. Revêtement de sol comprenant une structure multicouche comprenant au moins successivement une couche d'usure (1), une couche de décor (2) et une sous-couche (4), ***caractérisé en ce que*** la couche de décor (2) se présente sous la forme d'une feuille de textile non-tissé (3) imprégnée d'un liant et réalisée à partir d'un mélange comprenant le liant et des fibres de textile et dont l'une des faces comprend un décor imprimé sur ladite face par jet d'encre.

2. Revêtement de sol selon la revendication 1, ***caractérisé en ce que*** la feuille de textile non-tissé (3) est réalisée à partir du liant et de fibres naturelles, de fibres synthétiques, ou de fibres minérales synthétiques.

3. Revêtement de sol selon la revendication 2, ***caractérisé en ce que*** la feuille de textile non-tissé (3) est réalisée à partir d'un mélange de fibres naturelles et de fibres synthétiques et/ou de fibres minérales synthétiques.

4. Revêtement de sol selon la revendication 3, ***caractérisé en ce que*** la feuille de textile non-tissé (3) est réalisée à partir d'un mélange comprenant 20 à 80% de fibres naturelles et 80 à 20% de fibres synthétiques.

5. Revêtement de sol selon la revendication 2 à 4, ***caractérisé en ce que*** les fibres synthétiques sont des fibres de polyester.

6. Revêtement de sol selon la revendication 3, ***caractérisé en ce que*** la feuille de textile non-tissé (3) est réalisée à partir d'un mélange comprenant 20 à 80% de fibres naturelles et 80 à 20% de fibres minérales synthétiques.

7. Revêtement de sol selon la revendication 2, ***caractérisé en ce que*** les fibres minérales synthétiques sont des fibres de verre.

8. Revêtement de sol selon la revendication 2, ***caractérisé en ce que*** les fibres naturelles sont des fibres de cellulose.

9. Revêtement de sol selon la revendication 1 ***caractérisé en ce que*** la feuille de textile non-tissé (3) comprend 15 à 50% de liant en poids total de la feuille de textile non-tissé (3).

10. Revêtement de sol selon la revendication 1, ***caractérisé en ce que*** le liant est à base d'éthylene-acetate de vinyle, de styrène acrylique, d'acrylique ou de polychlorure de vinyle.

11. Revêtement de sol selon la revendication 1, ***caractérisé en ce que*** la feuille de textile non-tissé (3) présente un grammage compris entre 20 et 40 g/m².

12. Revêtement de sol selon la revendication 1, ***caractérisé en ce que*** la feuille de textile non-tissé (3) comprend une face en regard avec la sous-couche (4), laquelle face est liée à une armature de renfort (5).

13. Procédé de fabrication d'un revêtement de sol selon une des revendications 1 à 12, comprenant une structure multicouche incluant successivement au moins une couche d'usure (1), une couche de décor (2) et une sous-couche (4), ***caractérisé* en ce qu'**il consiste à imprimer un décor sur l'une des faces d'une feuille de textile non-tissé (3) imprégnée d'un liant et réalisée à partir d'un mélange comprenant le liant et des fibres de textile, au moyen d'une imprimante à jet d'encre projetant une encre liquide pour former la couche de décor (2), et à lier ensemble la couche d'usure (1), la couche de décor (2) et la sous-couche (4) pour former la structure multicouche du revêtement de sol.

14. Procédé selon la revendication 13, ***caractérisé* en ce que** le mélange de fibres et de liant est conformé en feuille et séché.

15. Procédé selon la revendication 13 ***caractérisé* en ce qu'**il comprend au moins une étape consistant à :
- enduire la sous-couche (4) sur une face inférieure de la couche de décor (2), et / ou
- enduire la couche d'usure (1) sur une face supérieure de la couche de décor (2).

## Patentansprüche

1. Bodenbelag, umfassend eine mehrschichtige Struktur, die zumindest und aufeinander folgend eine Verschleißschicht (1), eine Dekorschicht (2) und eine Unterschicht (4) umfasst, **dadurch gekennzeichnet, dass** die Dekorschicht (2) in Form eines mit einem Bindemittel imprägnierten Textilvlieses (3) aus einer Mischung aus Bindemittel und Textilfasern vorliegt, von denen eine Seite ein per Tintenstrahl auf die Oberfläche gedrucktes Dekor umfasst.

2. Bodenbelag nach Anspruch 1, **dadurch gekennzeichnet, dass** das textile Vlies (3) aus dem Bindemittel und Naturfasern, Kunstfasern oder synthetischen Mineralfasern hergestellt ist.

3. Bodenbelag nach Anspruch 2, **dadurch gekennzeichnet, dass** das textile Vlies (3) aus einer Mischung von Naturfasern und Kunstfasern und/oder synthetischen Mineralfasern hergestellt ist.

4. Bodenbelag nach Anspruch 3, **dadurch gekennzeichnet, dass** das textile Vlies (3) aus einer Mischung von 20 bis 80% Naturfasern und 80 bis 20% Kunstfasern hergestellt ist.

5. Bodenbelag nach Anspruch 2 bis 4, **dadurch gekennzeichnet, dass** die Kunstfasern Polyesterfasern sind.

6. Bodenbelag nach Anspruch 3, **dadurch gekennzeichnet, dass** das textile Vlies (3) aus einer Mischung von 20 bis 80% Naturfasern und 80 bis 20% synthetischen Mineralfasern hergestellt ist.

7. Bodenbelag nach Anspruch 2, **dadurch gekennzeichnet, dass** die synthetischen Mineralfasern Glasfasern sind.

8. Bodenbelag nach Anspruch 2, **dadurch gekennzeichnet, dass** die Naturfasern Cellulosefasern sind.

9. Bodenbelag nach Anspruch 1, **dadurch gekennzeichnet, dass** das textile Vlies (3) bezogen auf das Gesamtgewicht des Textilvlieses (3) 15 bis 50 % Bindemittel umfasst.

10. Bodenbelag nach Anspruch 1, **dadurch gekennzeichnet, dass** das Bindemittel auf der Grundlage von Ethylen-Vinylacetat, Acrylstyrol, Acryl oder Polyvinylchlorid besteht.

11. Bodenbelag nach Anspruch 1, **dadurch gekennzeichnet, dass** das textile Vlies (3) ein Gewicht zwischen 20 und 40 g/m² aufweist.

12. Bodenbelag nach Anspruch 1, **dadurch gekennzeichnet, dass** das textile Vlies (3) eine der Unterlage (4) zugewandte Fläche umfasst, die mit einer Verstärkungsbewehrung (5) verbunden ist.

13. Verfahren zur Herstellung eines Bodenbelags nach einem der Ansprüche 1 bis 12, der eine mehrschichtige Struktur mit nacheinander mindestens einer Verschleißschicht (1), einer Dekorschicht (2) und einer Unterschicht (4) umfasst, **dadurch gekennzeichnet, dass** es darin besteht, ein Dekor auf eine der Seiten eines mit einem Bindemittel imprägnierten Textilvliesstoffs (3) zu drucken, der aus einer Mischung aus Bindemittel und Textilfasern hergestellt ist, mittels eines Tintenstrahldruckers, der eine flüssige Tinte projiziert, um die dekorative Schicht (2) zu bilden, und Verbinden der Verschleißschicht (1), der dekorativen Schicht (2) und der Unterschicht (4), um die mehrschichtige Struktur des Bodenbelags zu bilden.

14. Verfahren nach Anspruch 13, **dadurch gekennzeichnet, dass** die Mischung aus Fasern und Bindemittel in die Form eines Bogens bzw. Blattes gebracht und getrocknet wird.

15. Verfahren nach Anspruch 13, **dadurch gekennzeichnet, dass** es mindestens einen Schritt umfasst, der darin besteht,
- die Unterschicht (4) auf der Unterseite der Dekorschicht (2) zu beschichten, und/oder
- die Verschleißschicht (1) auf der Oberseite der Dekorschicht (2) zu beschichten.

## Claims

1. Flooring comprising a multilayer structure comprising successively at least one wear layer (1), a decorative layer (2) and a sublayer (4), ***characterized in that*** the decorative layer (2) is in the form of a non-woven textile sheet (3) impregnated with a binder and one of the faces of which comprises a decoration printed on said face by ink jet.

2. Flooring according to claim 1, ***characterized in that*** the non-woven textile sheet (3) is produced from the binder and natural fibers, synthetic fibers, or synthetic mineral fibers.

3. Flooring according to claim 2, ***characterized in that*** the non-woven textile sheet (3) is produced from a mixture of natural fibers and synthetic fibers and/or synthetic mineral fibers.

4. Flooring according to claim 3, ***characterized in that*** the non-woven textile sheet (3) is produced from a mixture comprising 20% to 80% natural fibers and 80% to 20% synthetic fibers.

5. Flooring according to any one of claims 2 to 4, ***characterized in that*** the synthetic fibers are polyester fibers.

6. Flooring according to claim 3, ***characterized in that*** the non-woven textile sheet (3) is produced from a mixture comprising 20% to 80% natural fibers and 80% to 20% synthetic mineral fibers.

7. Flooring according to claim 2, ***characterized in that*** the mineral synthetic fibers are glass fibers.

8. Flooring according to claim 2, ***characterized in that*** the natural fibers are cellulose fibers.

9. Flooring according to claim 1, ***characterized in that*** the non-woven textile sheet (3) comprises 15% to 50% binder of total weight of the non-woven textile sheet (3).

10. Flooring according to claim 1, ***characterized in that*** the binder is based on ethylene-vinyl acetate, styrene acrylic, acrylic or polyvinyl chloride.

11. Flooring according to claim 1, ***characterized in that*** the non-woolen textile sheet (3) has a grammage of between 20 and 40 g/m².

12. Flooring according to claim 1, ***characterized in that*** the non-woven textile sheet (3) comprises one face opposite the sublayer (4), which face is connected to a reinforcing frame (5).

13. Method of manufacturing flooring according to any one of claims 1 to 12, comprising a multilayer structure successively including at least one wear layer (1), a decorative layer (2) and a sublayer (4), ***characterized in that*** it consists of printing a decoration on one of the faces of a non-woven textile sheet (3) impregnated with a binder, by means of an inkjet printer spraying a liquid ink in order to form the decorative layer (2), and of binding together the wear layer (1), the decorative layer (2) and the sublayer (4) to form the multilayer structure of the flooring.

14. Method according to claim 13, ***characterized in that*** the mixture of fibers and binder is formed into a sheet and dried.

15. Method according to claim 13, ***characterized in that*** it comprises at least one step consisting of:
- coating the sublayer (4) on a lower face of the decorative layer (2), and/or
- coating the wear layer (1) on an upper face of the decorative layer (2).
